# FASCICULE DE BREVET EUROPEEN

(11) **EP 1 276 790 B1**
(45) Date de publication et mention de la délivrance du brevet: **05.07.2006**
(21) Numéro de dépôt: 01919557.7
(22) Date de dépôt: 26.03.2001
(51) Int. Cl.: C08J 3/12, C08J 11/06, C08L 95/00, E01C 7/26

(54) **PROCEDE DE PREPARATION D'UN MATERIAU GRANULAIRE CAOUTCHOUTEUX ET SON UTILISATION DANS LE BITUMEN**
VERFAHREN ZUR HERSTELLUNG EINES KÖRNIGEN KAUTSCHUKMATERIALS UND DESSEN VERWENDUNG IN BITUMEN
METHOD FOR PREPARING A GRANULAR RUBBERLIKE MATERIAL AND ITS USE IN BITUMEN

(30) Priorité: 27.03.2000 FR 0003837; 26.10.2000 FR 0014249
(43) Date de publication de la demande: 22.01.2003
(73) Titulaire: PR Industrie, 21110 Genlis (FR)
(72) Inventeur: COUVERT, Michel, F-21120 Courtivron (FR); CHAVET, Benoît, F-21000 Dijon (FR)
(74) Mandataire: Honoré, Anne-Claire
(86) Numéro de dépôt international: PCT/FR2001/000899
(87) Numéro de publication internationale: WO 2001/072875

(56) Documents cités:
- EP-A- 0 305 225
- FR-A- 2 219 176
- DATABASE WPI Week 7812 Derwent Publications Ltd., London, GB; AN 1978-22074A XP002152534 & JP 50 151240 A (EIWA CHEM IND CO LTD), 4 décembre 1975 (1975-12-04)
- DATABASE CHEMABS [en ligne] CHEMICAL ABSTRACTS SERVICE, COLUMBUS, OHIO, EUA; XP002152533 & JP 51 023583 A (TOYO SODA MFG. CO., LTD) 25 février 1976 (1976-02-25)

## Description

La présente invention concerne un procédé de fabrication de granules à base de matériaux synthétiques ou naturels entrant dans la composition de revêtements routiers ou similaires pour améliorer notamment leurs propriétés rhéologiques et phoniques.

Dans le domaine des revêtements routiers, on connaît déjà depuis longtemps des enrobés, c'est-à-dire des revêtements routiers constitués de sable, de gravier et de bitume, comprenant divers adjuvants tels que des élastomères synthétiques ou un broyat de caoutchouc obtenu à partir de pneumatiques usagés afin d'améliorer notamment leur résistance à la fatigue et de diminuer les phénomènes de bruit tout en procurant l'avantage d'éliminer des déchets de caoutchouc. L'adjonction du caoutchouc dans les enrobés s'effectue de préférence en présence d'agents de compatibilisation ou de catalyseurs tels que, par exemple, une huile de type coupe pétrolifère ou du souffre afin d'obtenir un enrobé dont les caractéristiques physiques, notamment la relation viscosité-température, sont améliorées. Les procédés de fabrication de ces enrobés consistent habituellement dans la fabrication d'un liant constitué de bitume et de caoutchouc que l'on mélange intimement avec un ou plusieurs catalyseurs à une température comprise entre 150°C et 200°C puis dans l'adjonction et le mélange d'un granulat constitué de gravier et de sable.

C'est le cas, par exemple, du brevet européen EP 0 305 225 qui décrit un procédé de fabrication d'un liant pour revêtement de chaussées à base de bitume et de poudre en caoutchouc de récupération comportant, en tant qu'additif, une huile lourde à caractère naphténo-aromatique ainsi qu'un élastomère synthétique à saturation oléfinique faisant office de catalyseur dans la réaction d'incorporation du caoutchouc dans le bitume. Ce procédé consiste à mélanger intimement les différents constituants du liant afin d'obtenir un mélange initial, à chauffer ensuite ledit mélange à une température comprise entre 175°C et 185°C, puis à maintenir cette température sous agitation pendant environ deux heures et finalement à abaisser la température de 15°C à 20°C pour stocker le liant avant son utilisation pour la fabrication d'un revêtement routier, par exemple, la fabrication s'effectuant alors par son réchauffement à une température comprise entre 175°C et 185°C, puis par l'adjonction d'un granulat constitué de sable et de gravier.

De tels procédés de fabrication d'un liant bitumeux du type bitume-caoutchouc pour l'élaboration de revêtements routiers présentent l'inconvénient de nécessiter un matériel lourd et coûteux grevant de manière sensible les coûts de réalisation des routes. Par ailleurs, bien que les revêtements routiers obtenus selon ces procédés présentent des caractéristiques phoniques intéressantes avec des qualités acoustiques meilleures que celles des enrobés traditionnels, c'est-à-dire un simple mélange de bitume, de sable et de gravier, le niveau de bruit émis par ces enrobés lors du passage d'un véhicule est encore trop élevé.

L'un des buts de l'invention est donc de pallier ces inconvénients en proposant un procédé de fabrication de granules entrant dans la composition de revêtements routiers dits « à chaud » ou de revêtements routiers dits « à froid » tels que les émulsions de bitume, les émulsions de bitume modifié avec des polymères ou les bitumes « fluxés », ou analogues pour améliorer notamment leurs propriétés rhéologiques et phoniques sans nécessiter de matériel lourd et coûteux lors de la fabrication dudit revêtement.

A cet égard, les granules à base de matériaux synthétiques ou naturels entrant dans la composition de revêtements routiers constitués de sable, de gravier et de bitume comportent du caoutchouc intimement lié avec de la thermocolle

On comprend bien que la thermocolle intimement liée au caoutchouc joue le rôle de catalyseur de la réaction d'incorporation du caoutchouc dans l'enrobé des revêtements dits « à chaud », c'est-à-dire des revêtements dont la pose s'effectue à des températures comprises entre 150°C et 200°C.

Par ailleurs, lesdites granules présentent également l'avantage d'être aptes à être conditionnés ensemble sans s'agglomérer, contrairement aux particules de caoutchouc décrites dans le brevet JP-50.151240A.

La demande de brevet FR-2 219 176 A décrit une matière caoutchouteuse broyée provenant de pneumatiques de véhicules à moteur en combinaison avec de déchets de polyéthylène.

Selon une première variante, chaque granule consiste dans un granule et/ou des particules de caoutchouc enrobées de thermocolle, cette dernière assurant l'incorporation du caoutchouc dans l'enrobé des revêtements dits « à chaud ».

Selon une deuxième variante, chaque granule consiste dans au moins un granule et/ou au moins une particule de caoutchouc enrobé d'une première couche de thermocolle à laquelle adhère une seconde couche de brins de fibre assurant la cohésion du granule dans l'enrobé des revêtements dits « à froid », c'est-à-dire des revêtements dont la pose s'effectue à la température ambiante afin que le mélange présente des propriétés rhéologiques intéressantes telles qu'une bonne résilience, par exemple, et des propriétés phoniques améliorées avec une réduction d'au moins 2 décibels du bruit émis par le passage d'un véhicule par rapport aux revêtements routiers de l'art antérieur.

Par ailleurs, le caoutchouc consiste avantageusement dans des déchets broyés de caoutchouc vulcanisé, c'est-à-dire dans un broyat de pneumatiques automobiles, permettant ainsi le retraitement des déchets de caoutchouc.

De plus, la thermocolle consiste avantageusement dans un broyat de poly-oléfines, c'est-à-dire dans un broyat de polypropylène, de polyéthylène, d'Ethyle Vinyle Acétate (EVA), d'Ethyle Méthyle Acrylate (EMA) ou analogue, permettant ainsi le recyclage de poly-oléfines.

Selon l'invention, le procédé de fabrication de granules à base de matériaux synthétiques ou naturels dans la composition de revêtements routiers ou similaires est remarquable en ce qu'il comporte les étapes de transformation de caoutchouc sous forme de granules et/ou de particules et de transformation de la thermocolle sous forme de granules, puis de mélange intime des granules et/ou des particules de caoutchouc et des granules de thermocolle, puis de chauffage du mélange à travers, par exemple, un « plast-densificateur », une extrudeuse ou analogue, à une température comprise entre 80°C et 300°C pour que les granules de thermocolle se liquéfient et enrobent les granules et/ou les particules de caoutchouc qui restent globalement à l'état solide, et finalement de refroidissement desdits granules pour éviter qu'ils s'agglomèrent avant leur conditionnement dans des sacs, par exemple.

Afin d'obtenir des granules constitués de caoutchouc enrobé d'une première couche de thermocolle à laquelle adhère une seconde couche de brins de fibre, le procédé selon l'invention est remarquable en ce qu'il comporte les étapes de mélange intime de brins de fibre naturelle et/ou synthétique et des granules de caoutchouc enrobés de thermocolle, puis de chauffage du mélange à travers par exemple un plast-densificateur, une extrudeuse ou analogue, à une température comprise entre 80°C et 300°C pour que les brins de fibre se fixent à la thermocolle qui se liquéfie autour du caoutchouc et finalement de refroidissement desdits granules constitués de caoutchouc enrobé d'une première couche de thermocolle à laquelle adhère une couche de brins de fibre pour éviter qu'ils s'agglomèrent avant leur conditionnement dans des sacs.

Selon une caractéristique particulièrement avantageuse du procédé conforme à l'invention, on opère, avant le conditionnement des granules dans les sacs, une étape de broyage à travers un dégranulateur, par exemple, afin de séparer les granules de caoutchouc enrobés de thermocolle les uns des autres.

D'autres avantages et caractéristiques ressortiront mieux de la description qui va suivre, de plusieurs variantes d'exécution, données à titre d'exemples non limitatifs, des granules utilisés dans l'invention et de leur procédé de fabrication, en référence aux dessins annexés sur lesquels :
- la figure 1 est une vue schématique en coupe d'un granule utilisé dans l'invention,
- la figure 2 est une vue schématique en coupe d'une première variante d'exécution d'un granule utilisé dans l'invention,
- la figure 3 est une vue schématique en coupe d'une seconde variante d'exécution d'un granule utilisé dans l'invention,
- la figure 4 est une vue schématique en coupe d'une dernière variante d'exécution d'un granule utilisé dans l'invention,
- la figure 5 est une représentation schématique d'un dispositif mettant en oeuvre le procédé conforme à l'invention,

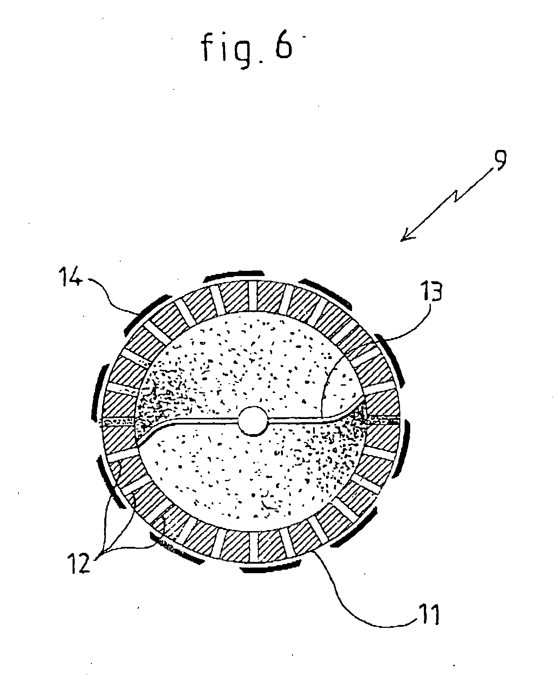

- la figure 6 est une représentation schématique en coupe de la chambre de densification du dispositif de la figure 2.

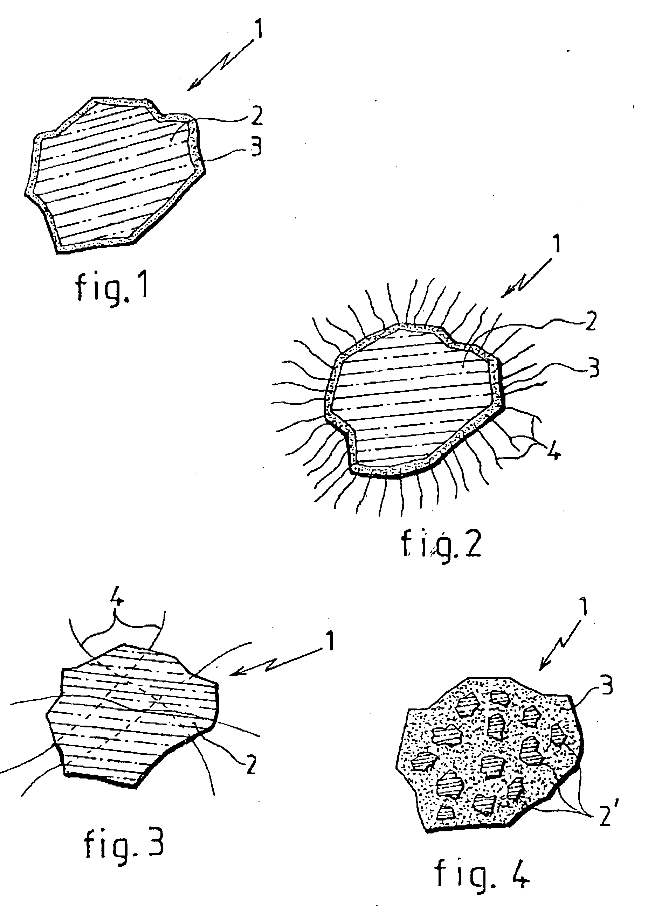

Le granule 1 utilisé dans l'invention schématiquement représenté sur la figure 1 consiste dans un granule de caoutchouc 2 enrobé de thermocolle 3, le terme « thermocolle » 3 désignant l'ensemble des matériaux présentant les caractéristiques d'une colle sous l'effet de la chaleur, c'est-à-dire les matériaux que la chaleur rend adhésifs. On notera que, bien que la thermocolle 3 soit schématiquement représentée sur la figure 1 par une couche finie enrobant le caoutchouc 2, ladite thermocolle 3 est également présente dans le caoutchouc 2 sur une faible épaisseur. En effet, le caoutchouc 2 vulcanisé étant poreux, la thermocolle 3 pénètre dans les pores du caoutchouc 2 lors de la fabrication des granules qui sera décrite en détail plus loin. La thermocolle 3 consiste avantageusement dans un broyat de poly-oléfines, c'est-à-dire dans un broyat de polypropylène, de polyéthylène, d'Ethyle Vinyle Acétate (EVA), d'Ethyle Méthyle Acrylate (EMA), c'est-à-dire d'éthylène acrylate de méthyle ou analogue, que l'on a chauffé jusqu'à sa liquéfaction pour enrober le caoutchouc comme on le verra plus loin. De plus, on entend par le terme « granule », des petits grains dont la granulométrie est comprise entre 1 et 10 mm environ.

Il va de soi que la thermocolle peut consister dans des matériaux non recyclés dits matériaux "nobles" sans pour autant sortir du cadre de l'invention.

Par ailleurs, le caoutchouc 2 consiste dans du caoutchouc d'origine naturelle, dans un broyat de caoutchouc vulcanisé tels qu'un broyat de Styrène Butadiène Rubber(SBR) ou d'Ethylène Propylène Diène Monomère(EPDM), par exemple, ou bien encore dans un broyat de caoutchouc thermoplastique tels qu'un broyat de Styrène Butadiène Styrène(SBS), de Styrène Ethylène Butadiène Styrène(SEBS) ou analogues. L'utilisation des broyats de caoutchouc permet le retraitement des déchets de caoutchouc tels que les pneumatiques usagés de véhicules légers ou de poids lourds, par exemple, qui sont habituellement entreposés dans des décharges faute d'être incinérés en raison de la pollution issue de leur combustion.

Les granules 1 de caoutchouc 2 enrobé de thermocolle 3 présentent avantageusement une granulométrie comprise entre 0 et 10 mm afin d'être incorporés dans un enrobé bitumeux en lui procurant des propriétés rhéologiques intéressantes, par exemple une souplesse et une résistance à l'orniérage. Par ailleurs, le Déposant a pu constater au cours de ses expériences que l'adjonction de 0,5 à 5% en poids des granules conformes à l'invention dans un enrobé bitumeux améliore ses qualités phoniques. En effet, conformément à la norme française S 31 119 (1993), un tel enrobé procure une réduction d'environ 6 décibels du bruit émis par un véhicule par rapport aux enrobés traditionnels, c'est-à-dire les enrobés comprenant uniquement du bitume, du sable et du gravier, et une réduction d'environ 2 décibels par rapport aux enrobés incorporant du caoutchouc décrits dans l'art antérieur. Le décibel étant une unité de mesure logarithmique, cette réduction du bruit d'au moins 2 décibels est très nettement perceptible à l'oreille donnant un plus grand confort pour les riverains des grands axes routiers notamment.

Il va de soi que l'enrobé comprenant les granules, conforme à l'invention est, à titre d'exemple non limitatif, particulièrement adapté aux voiries urbaines et peut être étalé sur une épaisseur variable suivant le type de support et le type de formulation.

Selon une première variante d'exécution des granules utilisés dans l'invention, représenté sur la figure 2, le granule 1 consiste dans du caoutchouc 2 enrobé d'une première couche de thermocolle 3 à laquelle adhère une seconde couche de brins de fibre 4 de sorte que les granules 1 sont peluchés, c'est-à-dire que les brins de fibre 4 intimement liés à la première couche de thermocolle 3 s'étendent librement à la périphérie dudit granule 1. De la même manière que précédemment, la thermocolle 3 consiste avantageusement dans un broyat de polyoléfine, le caoutchouc 2 consiste dans du caoutchouc d'origine naturelle, dans un broyat de caoutchouc vulcanisé ou bien encore dans un broyat de caoutchouc thermoplastique et les brins de fibre 4 consistent dans des brins de fibre naturelle telle que du coton, du chanvre, etc... ou dans des brins de fibre synthétique telle que des fibres de polypropylène, des fibres de polyester, etc...

On notera que les brins de fibre 4 des granules 1 assurent la cohésion du caoutchouc 2 dans l'enrobé des revêtements routiers dits « à froid » tels que les bitumes fluxés qui consistent dans un mélange de bitume et d'huile, et les émulsions de bitume ou les émulsions de bitume modifié qui consistent dans de l'eau mélangée avec du bitume ou respectivement du bitume modifié avec des polymères pour former une émulsion du type huile dans eau. Par ailleurs, les granules consistant dans du caoutchouc 2 enrobé d'une première couche de thermocolle 3 à laquelle adhère une seconde couche de brins de fibre 4 pourront également entrer dans la composition d'enrobés de revêtement routier dit « à chaud », la thermocolle 3 assurant alors le rôle de catalyseur de la réaction d'incorporation du caoutchouc 2 dans l'enrobé.

Les brins de fibre 4 sont avantageusement obtenus par le recyclage de déchets de papier, de textile, etc... procurant des brins de fibre respectivement de cellulose, de coton, de chanvre, etc... défoisonnés présentant une taille comprise entre 0 et 20 mm. Toutefois, comme on l'a vu précédemment, les granules 1 de caoutchouc 2 enrobés d'une première couche de thermocolle 3 présentent avantageusement une granulométrie comprise entre 0 et 10 mm afin de procurer à l'enrobé bitumeux dans lequel ils sont incorporés, des propriétés rhéologiques et phoniques intéressantes.

Selon une seconde variante d'exécution des granules utilisés dans l'invention, représenté sur la figure 3, le granule 1 consiste dans du caoutchouc 2 dans lequel sont emprisonnés des brins de fibre 4 qui s'étendent en dehors dudit caoutchouc 2. Le caoutchouc 2 provient du retraitement des pneumatiques usagés de véhicules légers ou de poids lourds qui sont broyés de telle sorte que l'on obtienne des granules 1 en caoutchouc peluchés, c'est-à-dire des granules dans lesquels sont emprisonnées des fibres s'étendant en dehors desdits granules 1, les brins de fibre provenant de la toile tissée du pneu. La granulométrie des granules de caoutchouc 2 est, de la même manière que précédemment, comprise entre 1 et 10 mm afin d'être incorporé dans un enrobé bitumeux dit « à froid », pour améliorer ses propriétés rhéologique et phonique, les brins de fibres 4 assurant la cohésion du caoutchouc 2 dans ledit enrobé.

Il va de soi que chaque granule 1 peut consister dans du caoutchouc 2 dans lequel est emprisonné un unique brin de fibre 4 qui s'étend en dehors dudit caoutchouc 2, sans pour autant sortir du cadre de l'invention.

Selon une dernière variante d'exécution des granules utilisés dans l'invention, en référence à la figure 4, le granule 1 consiste dans des particules de caoutchouc 2' enrobées de thermocolle 3, le terme « particules » désignant de très petites parties de caoutchouc dont la granulométrie est comprise entre 0 et 1 mm, telles que de la poudre de caoutchouc par exemple. On notera que, de la même manière que précédemment, les granules 1 présentent une granulométrie comprise entre 0 et 10 mm ; de plus, les particules de caoutchouc 2' sont obtenues par le broyage de caoutchouc vulcanisé ou bien encore de caoutchouc thermoplastique et la thermocolle 3 consiste dans des poly-oléfines.

Il va de soi que le granule 1 peut consister dans une unique particule de caoutchouc 2' enrobée de thermocolle 3 ou dans au moins un granule de caoutchouc 2 et au moins une particule de caoutchouc 2' enrobés de thermocolle 3, sans pour autant sortir du cadre de l'invention. De plus, il est bien évident que ledit granule 1 peut comprendre une seconde couche de brins de fibre 4 enrobant la première couche de thermocolle 3.

Par ailleurs la thermocolle 3 comprend avantageusement un colorant naturel organique, tel que la cochenille, et/ou un colorant naturel minéral, tel que l'ocre, et/ou un colorant synthétique afin de colorer le revêtement routier pour procurer, par exemple, un indicateur de l'usure dudit revêtement routier.

On décrira maintenant le procédé de fabrication des granules selon l'invention, en référence aux figures 1 à 5, à travers un exemple non limitatif de dispositif de plast-densification mettant en oeuvre ledit procédé.

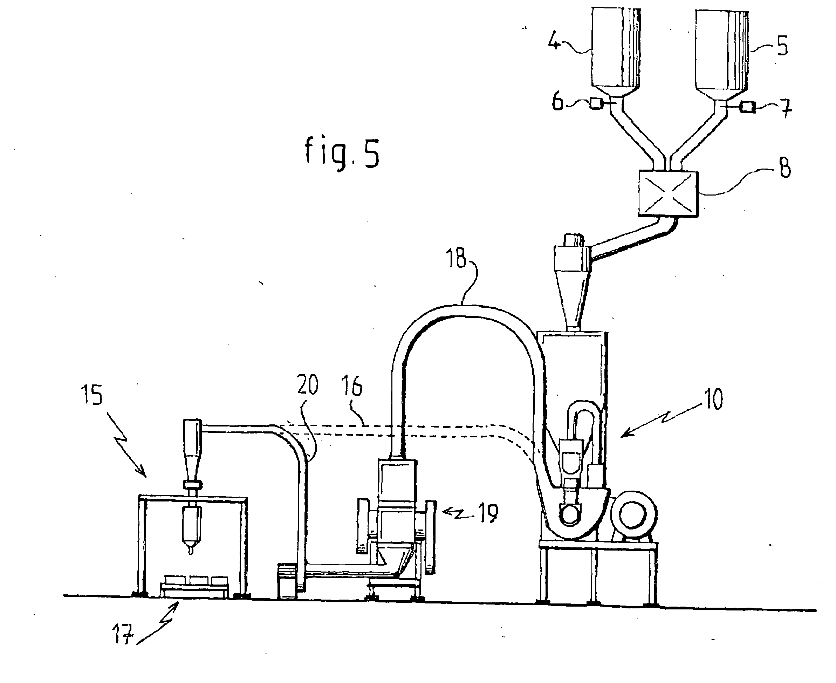

Le dispositif de plast-densification du type « PFV 400 » représenté sur la figure 4 et commercialisé par la société allemande PALLMAN comprend deux trémies 4 et 5 contenant respectivement du caoutchouc 2 et de la thermocolle 3 qui ont été préalablement transformés sous forme de granules et/ou de particules par broyage par exemple. Afin d'obtenir des granules 1 de caoutchouc 2 enrobé de thermocolle 3 (figure 1 et 4) dont la granulométrie est comprise entre 0 et 6 mm, la granulométrie des granules de caoutchouc 2 et particules de caoutchouc est avantageusement choisie entre 1 et 6 mm et respectivement entre 0 et 16 mm. Les trémies 4 et 5 sont respectivement équipées de doseurs 6 et 7 pour délivrer les quantités adéquates de granules et/ou de particules de caoutchouc 2, 2' et de thermocolle 3 dans un malaxeur à bande 8 où ils sont intimement mélangés. Le mélange comprend pour 100 parties pondérales, 20 à 80 parties de granules et/ou de particules de caoutchouc 2, 2' et 80 à 20 parties de granules de thermocolle 3 et de préférence, 60 à 70 parties de granules et/ou de particules de caoutchouc 2, 2' et 40 à 30 parties de granules de thermocolle 3 afin d'obtenir, notamment, un enrobé bitumeux suivant l'invention comprenant les granules décrits ci-dessus qui présente de bonnes caractéristiques rhéologiques telles que la souplesse du revêtement et des propriétés phoniques de réduction du bruit. Le mélange de granules de caoutchouc 2 et de thermocolle 3 est alors introduit, par une vis sans fin par exemple, dans la chambre de densification 9 d'un « densificateur » 10, représentée sur la figure 5.

En référence à la figure 5, la chambre de densification 9 est constituée d'un carter cylindrique 11 muni de trous 12 formant filière et d'une hélice de pression 13 d'axe de rotation confondu avec l'axe du carter 11 plaquant les granules de caoutchouc 2 et de thermocolle 3 contre la paroi interne dudit carter 11 jusqu'à leur engagement dans lesdits trous 12. Les frottements des granules et/ou des particules sur les parois des trous 12 induits par la pression provoque un échauffement des granules et/ou des particules jusqu'à une température comprise entre 80°C et 300°C qui liquéfie les granules de thermocolle 3 alors que les granules et/ou les particules de caoutchouc 2, 2' restent globalement à l'état solide à ces températures. La thermocolle 3 enrobe alors le caoutchouc 2 pour former à la sortie des trous 12 des fils de caoutchouc enrobé de thermocolle qui sont découpées par des couteaux 14 en rotation autour de la paroi externe du carter 11 pour finalement obtenir des granules 1 consistant dans au moins un granule et/ou au moins une particule de caoutchouc 2, 2' intimement liés avec de la thermocolle 3.

Selon une variante d'exécution du procédé de fabrication des granules selon l'invention, en référence aux figures 2, 4 et 5, les deux trémies 4 et 5 du dispositif de plast-densification (figure 4) contiennent respectivement des brins de fibre naturelle 4 et/ou synthétique et des granules consistant dans au moins un granule et/ou au moins une particule de caoutchouc 2, 2' intimement liées avec de la thermocolle 3 qui sont introduits en quantité adéquate, au moyen des doseurs 6 et 7, dans un malaxeur à bande 8 où ils sont intimement mélangés. Le mélange comprend pour 100 parties pondérales, 20 à 99 parties de granules 1 de caoutchouc 2 enrobés de thermocolle 3 et 80 à 1 parties de brins de fibre 4 et de préférence, 80 à 99 parties de granules 1 de caoutchouc 2 enrobés de thermocolle 3 et 20 à 1 parties de brins de fibre 4. Le mélange de brins de fibre et des granules 1 de caoutchouc 2 enrobés de thermocolle 3 est alors introduit dans la chambre de densification 9 du densificateur 10 représenté sur la figure 5. L'hélice de pression 13 de la chambre de densification 9, représentée sur la figure 5, plaque les brins de fibre 4 et les granules 1 de caoutchouc 2 enrobés de thermocolle 3 contre la paroi interne du carter 11 jusqu'à leur engagement dans les trous 12. Le frottement des granules 1 sur les parois des trous 12 induits par la pression provoque un échauffement des granules 1 jusqu'à une température comprise entre 80°C et 300°C qui liquéfie l'enrobage de thermocolle 3 de sorte que les brins de fibre 4 adhère à la couche de thermocolle 3 qui enrobe le caoutchouc 2 pour former, après découpage par les couteaux 14, des granules 1 consistant dans au moins un granule de caoutchouc 2 et/ou au moins une particule de caoutchouc 2' enrobés d'une première couche de thermocolle 3 à laquelle adhère une seconde couche de brins de fibre 4.

Il va de soi que les trous 12 présentent un diamètre de 3 à 10 mm pour permettre le passage des granules de caoutchouc 2 et des granules de thermocolle 3 tout en produisant un échauffement par frottement suffisant à la liquéfaction de la thermocolle 3.

De plus, il est bien évident que le dispositif de plast-densification représenté sur la figure 4 peut avantageusement comprendre trois trémies contenant respectivement des granules et/ou des particules de caoutchouc 2, 2', de la thermocolle 3 et des brins de fibre 4 qui sont introduits en quantité adéquate, au moyen de doseurs, dans un malaxeur à bande 8 où ils sont intimement mélangés, avant d'être introduits dans la chambre de densification 9 où la thermocolle 3 se liquéfie pour enrober le caoutchouc 2, les brins de fibre 4 adhérents à la couche de thermocolle 3, afin d'obtenir des granules 1 consistant dans des granules et/ou des particules de caoutchouc 2, 2' enrobés d'une première couche de thermocolle 3 à laquelle adhère une seconde couche de brins de fibre 4, sans pour autant sortir du cadre de l'invention.

Les granules 1 sont alors transportés jusqu'à une station d'ensachage 15 par un tuyau de transport pneumatique 16 de dimension suffisante pour permettre le refroidissement desdits granules 1 de telle sorte qu'ils ne s'agglomèrent pas avant leur conditionnement dans des sacs qui sont, par la suite, stockés sur des palettes 17.

Accessoirement, les granules 1 sont avantageusement transportés par un premier tuyau de transport pneumatique 18 jusqu'à un broyeur ou « dégranulateur » 19 qui désagrège les éventuels amas de granules 1 qui se sont formés à la sortie de la chambre de densification 9 puis, lesdits granules 1 sont transportés par un second tuyau de transport pneumatique 20 jusqu'à la station d'ensachage 15.

Il va de soi que le procédé de fabrication des granules suivant l'invention peut être mis en oeuvre dans un dispositif à extrusion ou par tout autre moyen d'enrobage connu tel que, par exemple, dans le domaine de la confiserie, les dispositifs d'enrobage de cacahouètes ou d'amandes par du chocolat bien connus de l'homme de l'art, sans pour autant sortir du cadre de l'invention.

Par ailleurs, un dernier procédé de fabrication des granules utilisés dans l'invention, en référence à la figure 3, consiste à broyer des pneus de voiture ou analogue de telle sorte que l'on obtienne des granules 1 en caoutchouc 2 peluchés, c'est-à-dire des granules 1 dans lesquels sont emprisonnés des brins de fibre 4 s'étendant en dehors des desdits granules. Les pneus de véhicules légers, de poids lourds ou analogues étant globalement constitués d'une carcasse métallique et d'une carcasse de toile en fibre tissée, enveloppées par du caoutchouc vulcanisé, un broyage approprié de ces derniers assorti d'un tri pour éliminer les parties métallique des pneus, permet d'obtenir des granules 1 de caoutchouc 2 dans lesquels est emprisonné au moins un brin de fibre 4 tel que représenté sur la figure 3.

Enfin, il va de soi que les exemples que l'on vient de donner ne sont que des illustrations particulières en aucun cas limitatives des domaines d'application de l'invention.

## Revendications

1. Procédé de fabrication de granules à base de matériaux synthétiques ou naturels entrant dans la composition de revêtements routiers ou similaires pour améliorer leurs propriétés rhéologiques et phoniques **caractérisé en ce qu'**il comporte les étapes suivantes :
- la transformation de caoutchouc sous forme de granules (2) et/ou de particules (2') et la transformation de la thermocolle (3) sous forme de granules, puis
- le mélange intime des granules et/ou des particules de caoutchouc (2, 2') et des granules de thermocolle (3), puis
- le chauffage du mélange à travers un « plast-densificateur » (10), une extrudeuse ou analogue, à une température comprise entre 80°C et 300°C pour que les granules de thermocolle (3) se liquéfient et enrobent les granules et/ou les particules de caoutchouc (2,2') qui restent globalement à l'état solide, et finalement
- le refroidissement desdits granules (1) pour éviter qu'ils s'agglomèrent avant leur conditionnement dans des sacs, par exemple.

2. Procédé selon la revendication 1 **caractérisé en ce qu'**il comporte les étapes suivantes :
- le mélange intime de brins de fibre naturelle et/ou synthétique et des granules (1) de caoutchouc (2) enrobés de thermocolle (3), puis
- le chauffage du mélange à travers un « plast-densificateur », une extrudeuse ou analogue, à une température comprise entre 80°C et 300°C pour que les brins de fibre (4) se fixent à la thermocolle qui se liquéfie autour du caoutchouc (2), et finalement
- le refroidissement desdits granules (1) constitués de caoutchouc (2) enrobé d'une première couche de thermocolle (3) et d'une seconde couche de brins de fibre (4), le refroidissement évitant qu'ils s'agglomèrent avant leur conditionnement dans des sacs.

3. Procédé selon la revendication 1 **caractérisé en ce qu'**il comporte les étapes suivantes :
- le mélange intime de granules et/ou de particules de caoutchouc (2, 2'), de granules de thermocolle (3) et de brins de fibre naturelle et/ou synthétique, puis
- le chauffage du mélange à travers un « plast-densificateur », une extrudeuse ou analogue, à une température comprise entre 80°C et 300°C pour que les granules de thermocolle (3) se liquéfient et enrobent les granules de caoutchouc (2), les brins de fibre (4) se fixant à la thermocolle (3), et finalement
- le refroidissement desdits granules (1) constitués de caoutchouc (2) enrobé d'une première couche de thermocolle (3) et d'une seconde couche de brins de fibre (4), le refroidissement évitant qu'ils s'agglomèrent avant leur conditionnement dans des sacs.

4. Procédé selon l'une quelconque des revendications 1 à 3 **caractérisé en ce que** l'on ajoute un colorant naturel organique et/ou colorant naturel minéral et/ou un colorant synthétique lors du mélange intime des granules et/ou des particules de caoutchouc (2, 2'), de la thermocolle (3) et/ou des brins de fibre (4) et/ou des granules (1) de caoutchouc enrobé de thermocolle (3).

5. Procédé selon l'une quelconque des revendications 1 à 4 **caractérisé en ce qu'**il comprend, avant le conditionnement des granules (1) dans les sacs, une étape de broyage à travers un « dégranulateur » (19) afin de séparer les granules (1) de caoutchouc (2) enrobés de thermocolle (3) les uns des autres.

6. Procédé selon la revendication 1 **caractérisé en ce que** le mélange comprend pour 100 parties pondérales, 20 à 80 parties de granules et/ou de particules de caoutchouc (2, 2') et 80 à 20 parties de granules de thermocolle (3).

7. Procédé selon la revendication 1 **caractérisé en ce que** le mélange comprend pour 100 parties pondérales, 60 à 70 parties de granules et/ou de particules de caoutchouc (2, 2') et 40 à 30 parties de granules de thermocolle (3).

8. Procédé selon la revendication 2 **caractérisé en ce que** le mélange comprend pour 100 parties pondérales, 20 à 99 parties de granules (1) de caoutchouc (2) enrobés de thermocolle (3) et 80 à 1 parties de brins de fibre (4).

9. Procédé selon la revendication 2 **caractérisé en ce que** le mélange comprend pour 100 parties pondérales, 80 à 99 parties de granules (1) de caoutchouc (2) enrobés de thermocolle (3) et 20 à 1 parties de brins de fibre (4).

10. Procédé selon l'une quelconque des revendications 1 à 9 **caractérisé en ce qu'**on utilise des granules de caoutchouc (2) qui ont une granulométrie comprise entre 1 et 10 mm.

11. Procédé selon l'une quelconque des revendications 1 à 10 **caractérisé en ce qu'**on utilise des particules de caoutchouc (2') qui ont une granulométrie comprise entre 0 et 1 mm.

12. Procédé selon l'une quelconque des revendications précédentes, **caractérisé en ce que** le caoutchouc (2) consiste dans un matériau choisi parmi le groupe comprenant un broyat de caoutchouc vulcanisé, un broyat de caoutchouc thermoplastique, un broyat de Styrène Butadiène Rubber (SBR), d'Ethylène Propylène Diène Monomère (EPDM), un broyat de Styrène Butadiène Styrène (SBS), et un broyat de Styrène Ethylène Butadiène Styrène (SEBS).

13. Procédé selon l'une quelconque des revendications précédentes **caractérisé en ce que** la thermocolle (3) consiste dans un broyat de poly-oléfines, c'est-à-dire dans un broyat de polypropylène, de polyéthylène, d'Ethyle Vinyle Acétate (EVA), d'Ethyle Méthyle Acrylate (EMA) ou analogue.

14. Procédé selon l'une quelconque des revendications précédentes **caractérisé en ce que** la thermocolle (3) comprend un colorant naturel organique et/ou un colorant naturel minéral et/ou un colorant synthétique.

15. Utilisation des granules susceptibles d'être obtenus par le procédé selon l'une quelconque des revendications 1 à 14 dans un enrobé bitumeux comprenant 0,5% à 5% en poids desdits granules.

16. Enrobé bitumeux, **caractérisé en ce qu'**il comprend 0,5 à 5 % en poids de granules susceptibles d'être obtenus par le procédé selon l'une quelconque des revendications 1 à 14.

## Claims

1. Process for manufacturing granules based on synthetic or natural materials used in the composition of road or similar surfacing to improve their rheological or acoustic properties, **characterised in that** it comprises the following steps:
- transformation of rubber into granules (2) and/or particles (2') and transformation of the hot melt glue (3) into granules, then
- intimate mixing of the granules and/or rubber particles (2, 2') and hot melt glue granules (3), then
- heating of the mix through a "plast-densifier" (10), an extruding machine or similar, at a temperature of between 80°C and 300°C so that the hot melt glue granules (3) liquefy and coat the granules and/or the rubber particles (2, 2') that globally remain in the solid state, and finally
- cooling of the said granules (1) to prevent them from agglomerating before they are packaged, for example in bags.

2. Process according to claim 1, **characterised in that** it comprises the following steps:
- intimate mixing of natural and/or synthetic fibre strands and granules (1) of rubber (2) coated with hot melt glue (3), then
- heating of the mix through a "plast-densifier", an extruding machine or similar, at a temperature of between 80°C and 300°C so that the fibre strands (4) fix to the hot melt glue that liquefies around the rubber (2), and finally
- cooling of the said granules (1) formed of rubber (2) coated with a first layer of hot melt glue (3) and a second layer of fibre strands (4), cooling preventing them from agglomerating before they are packaged in bags.

3. Process according to claim 1, **characterised in that** it comprises the following steps:
- intimate mixing of granules and/or rubber particles (2, 2'), hot melt glue granules (3) and natural and/or synthetic fibre strands, then
- heating of the mix through a "plast-densifier", an extruding machine or similar, at a temperature of between 80°C and 300°C so that the hot melt glue granules (3) liquefy and coat the rubber granules (2), the fibre strands (4) fixing to the hot melt glue (3), and finally
- cooling of the said granules (1) made of rubber (2) coated with a first layer of hot melt glue (3) and a second layer of fibre strands (4), cooling preventing them from agglomerating before they are packaged in bags.

4. Process according to any one of claims 1 to 3, **characterised in that** a natural organic colouring agent and/or a mineral colouring agent and/or a synthetic colouring agent is added during intimate mixing of the granules and/or rubber particles (2, 2'), the hot melt glue (3) and/or fibre strands (4) and/or rubber granules (1) coated with hot melt glue (3).

5. Process according to any one of claims 1 to 4, **characterised in that** it comprises a grinding step through a "degranulator" (19) to separate the granules (1) of rubber (2) coated with hot melt glue (3) from each other, before the granules are packaged in bags.

6. Process according to claim 1, **characterised in that** the mix comprises 20 to 80 parts of granules and/or rubber particles (2, 2') and 80 to 20 parts of hot melt glue granules (3), for 100 parts by weight.

7. Process according to claim 1, **characterised in that** the mix comprises 60 to 70 parts of granules and/or rubber particles (2, 2') and 40 to 30 parts of hot melt glue granules (3) for 100 parts by weight.

8. Process according to claim 2, **characterised in that** the mix comprises 20 to 99 parts of granules (1) of rubber (2) coated with hot melt glue (3) and 80 parts to 1 part of fibre strands (4) for 100 parts by weight.

9. Process according to claim 2, **characterised in that** the mix comprises 80 to 99 parts of granules (1) of rubber (2) coated with hot melt glue (3) and 20 parts to 1 part of fibre strands (4) for 100 parts by weight.

10. Process according to any one of claims 1 to 9, **characterised in that** the size grading of the rubber granules (2) used is between 1 mm and 10 mm.

11. Process according to any one of claims 1 to 10, **characterised in that** the size grading of the rubber particles (2') used is between 0 mm and 1 mm.

12. Process according to any one of the previous claims, **characterised in that** rubber (2) is a material chosen from among the group comprising ground vulcanised rubber, ground thermoplastic rubber, ground Styrene Butadiene Rubber (SBR), ground Ethylene Propylene Diene Monomer (EPDM), ground Styrene Butadiene Styrene (SBS) and ground Styrene Ethylene Butadiene Styrene (SEBS).

13. Process according to any one of the previous claims, **characterised in that** the hot melt glue (3) consists of ground polyolefin, in other words ground polypropylene, polyethylene, Ethyl Vinyl Acetate (EVA), Ethyl Methyl Acrylate (EMA) or similar.

14. Process according to any one of the previous claims, **characterised in that** the hot melt glue (3) comprises a natural organic colouring agent and/or a natural mineral colouring agent and/or a synthetic colouring agent.

15. Use of granules that could be obtained using the process according to any one of claims 1 to 14 in a bituminous mix comprising 0.5% to 5% by weight of the said granules.

16. Bituminous mix **characterised in that** it comprises 0.5% to 5% by weight of granules that could be obtained using the process according to any one of claims 1 to 14.

## Patentansprüche

1. Prozedur des Herstellens von Körnchen auf Basis von synthetischen oder natürlichen Materialien eingebracht in die Zusammensetzung von Straßenbelägen oder gleichartigen um deren rheologische und phonische Eigenschaften zu verbessern, charakterisiert **dadurch** dass sie die folgenden Etappen beinhaltet:
- die Umwandlung von Kautschuk in Form von Körnchen (2) und/oder von Partikeln (2') und die Umwandlung des Thermoklebstoffes (3) in Form von Körnchen, und danach
- die intime Vermischung der Körnchen und/oder der Kautschukpartikel (2,2') und der Thermoklebstoffkörnchen (3), und danach
- das Heizen der Mischung mittels einem "Plast-Verdichter" (10), einer Strangpresse oder analog, bei einer Temperatur enthalten zwischen 80°C und 300°C damit die Thermoklebstoffkörnchen (3) sich verflüssigen und die Körnchen und/oder die Kautschukpartikel (2,2') welche global im festen Zustand bleiben zu umhüllen, und schließlich
- das Abkühlen besagter Körnchen (1) um zu verhindern dass sie sich anhäufen vor ihrer Verpackung in Säcken, zum Beispiel.

2. Prozedur nach Anspruch 1 charakterisiert **dadurch** dass sie folgende Etappen beinhaltet:
- die intime Vermischung der Naturfiberfasern und/oder synthetischen Fiberfasern und der Körnchen (1) aus Kautschuk (2) umhüllt mit Thermoklebstoff (3), und danach
- das Heizen der Mischung durch einen "Plast-Verdichter", eine Strangpresse oder analog, bei einer Temperatur enthalten zwischen 80°C und 300°C damit die Fiberfasern (4) sich auf den Thermoklebstoff festsetzen, welcher sich um den Kautschuk (2) verflüssigt, und schließlich
- das Abkühlen besagter Körnchen (1) bestehend aus Kautschuk (2) umhüllt mit einer ersten Schicht von Thermoklebstoff (3) und einer zweiten Schicht von Fiberfasern (4), das Abkühlen verhindernd dass sie sich anhäufen vor ihrer Verpackung in Säcken.

3. Prozedur nach Anspruch 1 charakterisiert **dadurch** dass sie folgende Etappen beinhaltet:
- die intime Vermischung von Körnchen und/oder Partikeln von Kautschuk (2,2'), von Thermoklebstoffkörnchen (3) und von natürlichen und/oder synthetischen Fiberfasern, und danach
- das Heizen der Mischung durch einen "Plast-Verdichter", eine Strangpresse oder analog, bei einer Temperatur enthalten zwischen 80°C und 300°C damit die Thermoklebstoffkörnchen (3) sich verflüssigen und die Kautschukkörnchen (2) umhüllen, die Fiberfasern (4) sich auf dem Thermoklebstoff (3) festsetzen, und schließlich
- das Abkühlen besagter Körnchen (1) bestehend aus Kautschuk (2) umhüllt mit einer ersten Schicht von Thermoklebstoff (3) und einer zweiten Schicht von Fiberfasern (4), das Abkühlen verhindernd dass sie sich anhäufen vor ihrer Verpackung in Säcken.

4. Prozedur nach einem der Ansprüche 1 bis 3 charakterisiert **dadurch** dass man hinzufügt einen natürlichen organischen und/oder natürlichen mineralischen und/oder einen synthetischen Farbstoff beim intimen Vermischen der Körnchen und/oder der Kautschukpartikel (2,2'), des Thermoklebstoffs (3) und/oder der Fiberfasern (4) und/oder der Körnchen (1) von Kautschuk umhüllt mit Thermoklebstoff (3).

5. Prozedur nach einem der Ansprüche 1 bis 4 charakterisiert **dadurch** dass sie beinhaltet, vor der Verpackung der Körner (1) in den Säcken, eine Etappe des Zerkleinerns durch einen "Entkörner" (19) um die Körnchen (1) von Kautschuk (2) umhüllt mit Thermoklebstoff (3) voneinander zu trennen.

6. Prozedur nach Anspruch 1 charakterisiert **dadurch** dass die Mischung enthält für 100 Gewichtsteile, 20 bis 80 Teile von Körnchen und/oder von Kautschukpartikeln (2,2') und 80 bis 20 Teile von Thermoklebstoffkörnchen (3).

7. Prozedur nach Anspruch 1 charakterisiert **dadurch** dass die Mischung enthält für 100 Gewichtsteile, 60 bis 70 Teile von Körnchen und/oder von Kautschukpartikeln (2,2') und 40 bis 30 Teile von Thermoklebstoffkörnchen (3).

8. Prozedur nach Anspruch 2 charakterisiert **dadurch** dass die Mischung enthält für 100 Gewichtsteile, 20 bis 99 Teile von Körnchen (1) von Kautschuk (2) umhüllt mit Thermoklebstoff (3) und 80 bis 1 Teile von Fiberfasern (4).

9. Prozedur nach Anspruch 2 charakterisiert **dadurch** dass die Mischung enthält für 100 Gewichtsteile, 80 bis 99 Teile von Körnchen (1) von Kautschuk (2) umhüllt mit Thermoklebstoff (3) und 20 bis 1 Teile von Fiberfasern (4).

10. Prozedur nach einem der Ansprüche 1 bis 9 charakterisiert **dadurch** dass Kautschukkörnchen (2) gebraucht werden welche eine Kornabstufung zwischen 1 und 10 mm besitzen.

11. Prozedur nach einem der Ansprüche 1 bis 10 charakterisiert **dadurch** dass Kautschukpartikel (2') gebraucht werden welche eine Kornabstufung zwischen 0 und 1 mm besitzen.

12. Prozedur nach einem der vorangehenden Ansprüche charakterisiert **dadurch** dass der Kautschuk (2) besteht aus einem Material ausgewählt aus der Gruppe enthaltend eine Zerkleinerung von vulkanisiertem Kautschuk, eine Zerkleinerung von thermoplastischem Kautschuk, eine Zerkleinerung von Styren Butadien Gummi (SBR), ein Monomer von Äthylen Propylen Dien (EPDM), eine Zerkleinerung von Styren Butadien Styren (SBS), und eine Zerkleinerung von Styren Äthylen Butadien Styren (SEBS).

13. Prozedur nach einem der vorangehenden Ansprüche charakterisiert **dadurch** dass der Thermoklebstoff (3) besteht aus einer Zerkleinerung von Poly-Olefinen, das heißt aus einer Zerkleinerung von Polypropylen, von Polyethylen, von Äthyl Vinyl Azetat (EVA), von Äthyl Methyl Akrylat (EMA) oder analogen.

14. Prozedur nach einem der vorangehenden Ansprüche charakterisiert **dadurch** dass der Thermoklebstoff (3) einen natürlichen organischen und/oder einen natürlichen mineralischen und/oder einen synthetischen Farbstoff enthält.

15. Anwendung der Körnchen erhalten durch die Prozedur entsprechend einem der Ansprüche 1 bis 14 in einer Bitumendeckschicht enthaltend 0,5 % bis 5 % nach Gewicht der besagten Körnchen.

16. Bitumendeckschicht, charakterisiert **dadurch** dass sie enthält 0,5 bis 5 % nach Gewicht der Körnchen welche erhalten wurden durch die Prozedur nach einem der Ansprüche 1 bis 14.
